Europäisches Patentamt

**(19)** European Patent Office

Office européen des brevets

**(11)** Numéro de publication : **0 336 829 B1**

**(12)** # FASCICULE DE BREVET EUROPEEN

**(45)** Date de publication du fascicule du brevet :
02.10.91 Bulletin 91/40

**(51)** Int. Cl.$^5$ : **G01N 19/04**

**(21)** Numéro de dépôt : 89400910.9

**(22)** Date de dépôt : 03.04.89

**(54)** Procédé et appareil de mesure du comportement mécanique de liaisons de surfaces par adhésifs.

**(30)** Priorité : 06.04.88 FR 8804550

**(43)** Date de publication de la demande :
11.10.89 Bulletin 89/41

**(45)** Mention de la délivrance du brevet :
02.10.91 Bulletin 91/40

**(84)** Etats contractants désignés :
AT BE CH DE ES GB GR IT LI LU NL SE

**(56)** Documents cités :
DE-A- 2 435 068
GB-A- 2 121 547
US-A- 4 010 640
US-A- 4 010 641

**(73)** Titulaire : ASSOCIATION POUR LA
RECHERCHE ET LE DEVELOPPEMENT DES
METHODES ET PROCESSUS INDUSTRIELS
(ARMINES)
60, Boulevard Saint-Michel
F-75272 Paris Cédex 06 (FR)

**(72)** Inventeur : Gilibert, Yvon
11 Rue Eugène Delacroix La Neuvillette
F-51100 Reims (FR)

**(74)** Mandataire : Bruder, Michel
10 rue de la Pépinière
F-75008 Paris (FR)

## Description

La présente invention concerne un procédé et un appareil de mesure du comportement mécanique fin des liaisons d'interfaces rugueuses liées par adhésifs, engendrant des interphases entre les couches élémentaires différentes d'un multimatériau et un substrat ou un autre multimatériau collés ensemble.

Parmi les multimatériaux couramment utilisés dans l'industrie on trouve les associations de couches successives de matériaux de structure et/ou fonctionnels liées entre elles. Les matériaux de structure peuvent être par example des métaux, verres, ciments, céramiques, polymères, élastomères, bois etc. Les couches élémentaires constituant un tel multimatériau peuvent être liées les unes aux autres par collage, soudage, plaquage, etc.

Pour prévoir le comportement global d'un multimatériau, constitué de couches élémentaires de matériaux différents liées les unes aux autres, qui est assemblé par collage avec une autre pièce, telle qu'un substrat ou un autre multimatériau il est courant de réaliser des essais de rupture de liaisons collées de chacune des couches individuelles du multimatériau, prises séparément, avec un substrat. Ces essais de rupture permettent d'obtenir des indications relatives à la rupture des liaisons adhésives individuelles mais qui toutefois ne caractérisent pas avec précision le comportement effectif de ces liaisons dans leur milieu réel lorsqu'elles se trouvent associées au collage du multimatériau à un substrat ou à un autre multimatériau de forme appropriée.

La présente invention vise à remédier à ces inconvénients en procurant un procédé et un appareil de mesure simples à mettre en oeuvre et procurant des résultats de mesure précis.

A cet effet ce procédé de mesure du comportement mécanique fin des liaisons d'interfaces rugueuses liées par adhésifs, engendrant des interphases entre les couches élémentaires différentes d'un multimatériau et un substrat ou un autre multimatériau collés ensemble, est caractérisé en ce qu'on interpose entre les faces du multimatériau et celles de l'autre pièce, substrat ou multimatériau, devant être assemblées par collage, des morceaux d'adhésifs bifaces bicollants, on soumet les deux pièces collées au moyen des morceaux d'adhésifs bifaces à une sollicitation mécanique et on mesure, au moyen de jauges d'extensométrie reliées à un appareil d'extensométrie, les déformations superficielles résultant des contraintes apparaissant dans les différents morceaux d'adhésifs bifaces, sous l'effet de la sollicitation mécanique.

L'invention a également pour objet un appareil de mesure du comportement mécanique fin des liaisons d'interfaces rugueuses liées par adhésifs, engendrant des interphases entre les couches élémentaires différentes d'un multimatériau et un substrat ou un autre multimatériau collés ensemble, caractérisé en ce qu'il comprend, entre les faces du multimatériau et de l'autre pièce, substrat ou multimatériau devant être collées ensemble, des morceaux d'adhésifs bifaces bicollants et un ensemble de jauges d'extensométrie reliées à un appareil d'extensométrie ces jauges étant disposées à proximité desdites faces pour mesurer les déformations superficielles engendrées par les contraintes produites dans les morceaux d'adhésifs sous l'effet d'une sollicitation mécanique.

On décrira ci-après, à titre d'exemples non limitatifs, divers formes d'exécution de la présente invention, en référence au dessin annexé sur lequel :

La figure 1 est une vue en élévation d'un appareil de mesure suivant l'invention, pour l'étude du comportement mécanique d'un assemblage, par morceaux d'adhésifs bifaces, entre un substrat monobloc et un multimatériau constitué de couches liées les unes aux autres.

Les figures 2 à 5a sont des vues en élévation de variantes d'exécution de l'appareil de mesure de la figure 1.

La figure 6 est une vue en coupe verticale et longitudinale d'une variante d'exécution d'un appareil de mesure conçu pour l'étude du comportement de deux multimatériaux assemblés par collage au moyen de morceaux d'adhésifs bifaces.

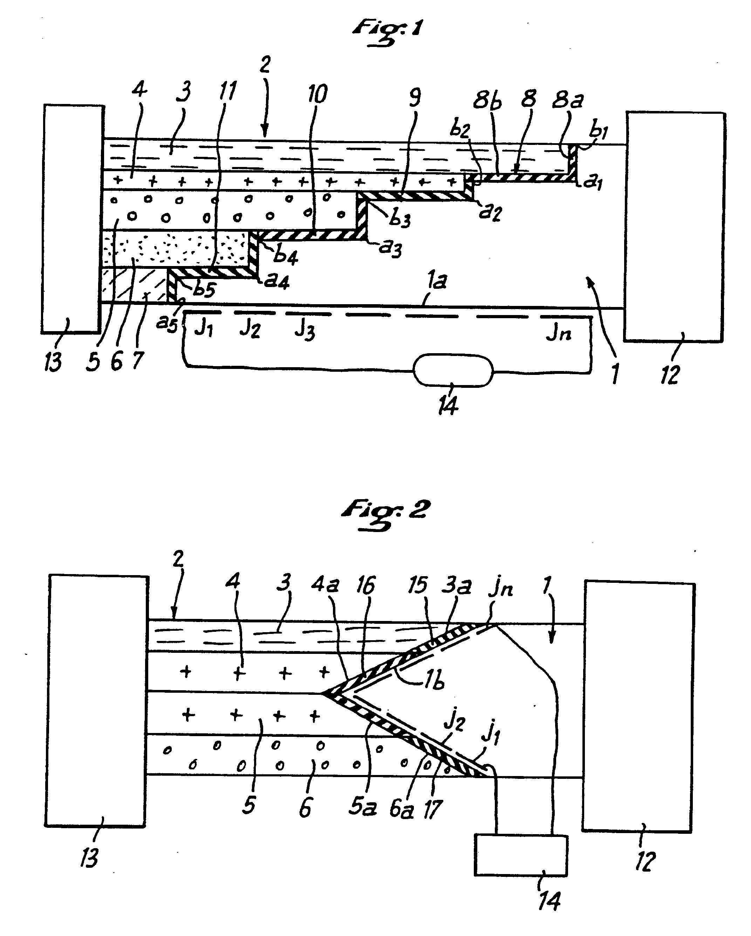

L'appareil de mesure représenté sur la figure 1 est destiné à l'étude du comportement mécanique fin des liaisons d'interfaces liées par adhésifs, entre un substrat monobloc métallique 1 et un multimatériau 2 constitué, dans cet exemple particulier non limitatif, de cinq couches individuelles 3, 4, 5, 6, 7 de matériaux différents, liées les unes aux autres. Ces matériaux différents qui sont représentés, suivant leur nature, par des signes différents tels que tirets, croix, petits cercles, pointillés etc. peuvent former des structures porteuses, une structure isolante thermiquement, mécaniquement ou électriquement, une structure de protection etc, suivant les conditions posées par l'emploi du multimatériau 2. La liaison entre le substrat 1 et le multimatériau 2 est réalisée suivant une zone de joint en escalier qui est délimité, dans la face frontale du substrat 1, par des gradins verticaux a1-b1, a2-b2, a3-b3, a4-b4, a5-b5, décalés de haut en bas et de la droite vers la gauche dans cet ordre, en délimitant ainsi des paliers horizontaux a1-b2, a2-b3, a3-b4 et a4-b5 également décalés de haut en bas et de droite à gauche. De la même façon le multimatériau 2 présente une face frontale en forme d'escalier complémentaire de celle du substrat 1. La liaison entre les faces parallèles en regard est réalisée au moyen de plusieurs morceaux d'adhésifs bifaces et bicollants 8, 9, 10, 11 qui sont repliés de manière à prendre la forme des intervalles délimités entre les faces parallèles à coller. La couche individuelle supérieure 3 du multimatériau 2 s'étend ainsi jusqu'au fond du dièdre formé par le gradin vertical a1-b1 et le palier horizontal a1-b2 et un morceau d'adhésif 8 est disposé entre eux. Ce morceau d'adhésif 8 est replié en forme de dièdre, une aile verticale 8a de ce dièdre s'étendant entre la face frontale verticale 3a de la couche individuelle supérieure 3 et le gradin vertical a1-b1, tandis que l'aile horizontale 8b du morceau d'adhésif 8 s'étend entre la partie extrême de la face inférieure de la couche 3 et le palier horizontal a1-b2. De la même façon d'autres morceaux d'adhésifs bifaces et bicollants 9, 10, 11, repliés en forme de dièdres à faces verticales et horizontales, sont interposés entre les parties extrêmes des autres couches 4, 5, 6, 7, et les dièdres formées par les autres gradins verticaux et paliers horizontaux de la face frontale du substrat 1. Le morceau adhésif inférieur 11, replié en Z, est utilisé pour assurer également la liaison par collage entre les deux couches les plus basses 6 et 7 et le substrat 1.

Pour mesurer le comportement mécanique fin d'un tel assemblage, le substrat 1 et le multimatériau 2 sont respectivement rendus solidaires de deux dispositifs d'ancrage 12, 13 permettant de solliciter mécaniquement l'assemblage en traction, compression, torsion, flexion etc sur une machine d'essai de tout type approprié. La mesure du comportement de l'assemblage et plus particulièrement des morceaux d'adhésifs bifaces 8-11 est réalisé au moyen d'un ensemble de jauges d'extensométrie j1, j2, j3...jn qui, dans cette forme d'exécution non limitative de l'invention, sont appliquées, à distance les unes des autres, contre la face inférieure 1a du substrat 1, en partant de l'extrémité du gradin vertical le plus bas a5-b5 du substrat 1. Autrement dit la première jauge j1 est située sous le substrat 1 à proximité immédiate du gradin vertical extrême et inférieur a5-b5, la jauge extrême opposée jn étant située sensiblement à l'aplomb du gradin vertical le plus haut a1-b1 c'est-à-dire situé à l'extrémité droite de l'ensemble du joint. Toutes les jauges j1...jn sont reliées à un appareil de mesure extensométrique 14.

L'appareil de mesure suivant l'invention permet, lorsque l'assemblage formé par le substrat 1 et le multimatériau 2 collés ensemble est soumis à une sollicitation mécanique, par l'intermédiaire des dispositifs d'ancrage 12, 13, de déterminer, à partir des déformations superficielles relevées à l'endroit de la face inférieure 1a du substrat 1 par les jauges j1...jn, le comportement des divers joints adhésifs bifaces 8, 9, 10, 11, et notamment le seuil de l'effort exercé à partir duquel apparaissent les premières microfissures.

L'utilisation, pour la réalisation de l'assemblage collé, de morceaux adhésifs bifaces 8-11 offre l'avantage que l'on est assuré d'obtenir des épaisseurs de joint constantes, du fait que cette épaisseur est fixée par l'épaisseur du matériau lui-même constituant l'adhésif.

Par ailleurs un autre avantage procuré par l'appareil suivant l'invention est qu'il permet de réutiliser le substrat 1 équipé des jauges j1...jn pour réaliser des essais avec différents multimatériaux 2 : il suffit de changer les adhésifs bifaces 8-11 après chaque essai.

Dans la variante d'exécution représentée sur la figure 2 le multimatériau est constitué de quatre couches accolées 3, 4, 5, 6, les deux couches intermédiaires 5 et 6 étant représentées comme étant de même nature alors que les couches extrêmes supérieure 3 et inférieure 6 sont constituées par des matériaux différents. Le substrat 1 se termine par une face frontale 1b en forme de pointe et la face frontale formée par les quatre couches 3-6 est creusée d'un évidement de forme complémentaire, c'est-à-dire en forme de dièdre de même angle au sommet que la pointe 1b du substrat 1. L'assemblage est réalisé, dans ce cas, au moyen de trois morceaux d'adhésifs bifaces 15, 16, 17. Le morceau d'adhésif 15 s'étend entre la face frontale 3a, inclinée en biseau, de la couche supérieure 3 et la partie correspondante de la face supérieure de la pointe 1b. Le morceau d'adhésif 16 s'étend entre les deux faces frontales 4a, 5a des deux couches intermédiaires 4, 5, et il est replié sur lui-même en forme de V pour s'étendre entre les deux faces frontales 4a, 5a et la partie extrême de la pointe 1b. Enfin le morceau 17 s'étend entre la face frontale en biseau 6a de la couche inférieure 6 et la partie inférieure de la pointe 1b du substrat 1. Dans cette forme d'exécution de l'appareil les jauges j1, j2...jn s'étendent en formant un dièdre suivant au plus près le dièdre formé par la pointe 1b du substrat 1.

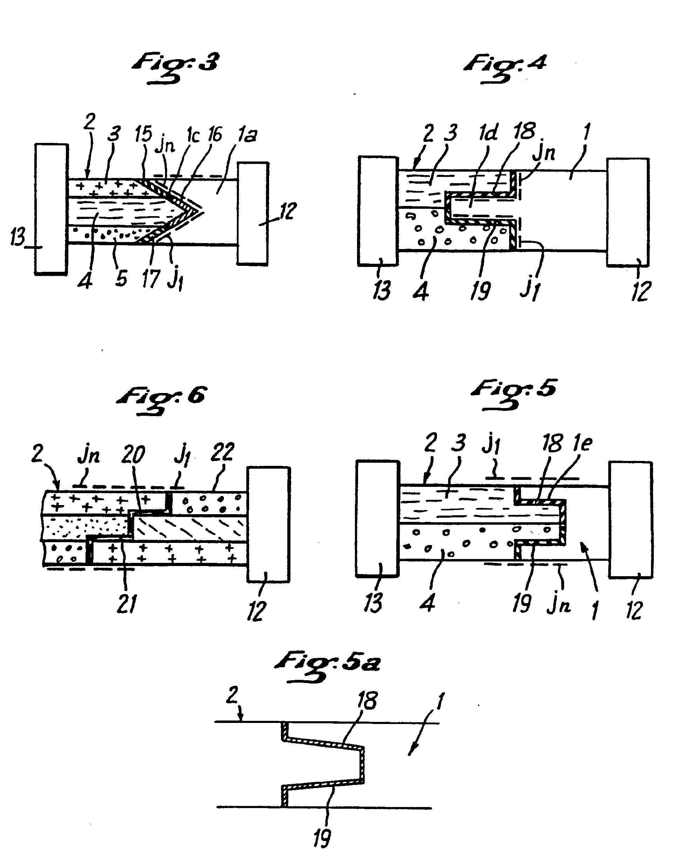

Dans la variante d'exécution représentée sur la figure 3 la disposition de la figure 2 est inversée c'est-à-dire que le substrat 1 se termine par une face frontale 1c creusée en forme de dièdre tandis que les trois couches individuelles 3, 4, 5 du multimatériau 2 sont taillées de manière à présenter une partie extrême en forme de pointe s'engageant dans le creux 1c. Là encore des morceaux d'adhésifs bifaces 15, 16, 17 sont intercalés entre le creux 1c constituant la face frontale du substrat 1 et les faces frontales inclinées des trois couches 3, 4, 5. Les jauges d'extensométrie j1...jn s'étendent suivant un dièdre à proximité immédiate du creux 1c formé dans le substrat 1.

Dans la variante d'exécution représentée sur la figure 4 le substrat 1 présente à son extrémité un tenon 1d s'engageant dans une mortaise qui est formée dans les faces frontales verticales et dans les faces horizontales accolées de deux couches superposées 3, 4 constituant le multimatériau 2. L'assemblage est réalisé au moyen de deux morceaux d'adhésif biface 18, 19 en forme de Z qui sont appliqués entre le tenon 1d, de part et d'autre de celui-ci, et la mortaise. Les jauges d'extensométrie j1...jn s'étendent là encore le long du tracé du tenon 1d.

Dans la variante d'exécution représentée sur la figure 5 la disposition de la figure 4 est inversée, c'est-à-dire que dans la face frontale du substrat 1 est creusée une mortaise 1e dans laquelle s'engage un tenon formé sur les faces frontales des deux couches individuelles 3, 4 constituant le multimatériau 2. L'assemblage est réalisé au moyen de deux morceaux d'adhésif 18, 19 ayant chacun la forme d'un Z pour épouser le tracé de l'intervalle entre les faces en regard. Les jauges j1...jn sont dans ce cas réparties sur les faces supérieures et inférieures du substrat 1 et du multimatériau 2, de part et d'autre du joint.

Pour certaines applications (voir figure 5a) lorsque le tenon est en une partie, il est utile de donner un angle faible, favorisant le montage.

La figure 6 illustre une variante d'exécution d'un appareil de mesure utilisé avec deux multimatériaux 2, 22 assemblés suivant un joint en escalier. Autrement dit l'appareil de la figure 6 utilise, à la place du substrat monobloc 1, un multimatériau 22 lui-même constitué du même nombre de couches, en l'occurrence trois, que l'autre multimatériau 2. Des morceaux d'adhésifs bifaces 20, 21 sont repliés en forme de dièdres pour assembler les couches individuelles entre elles comme dans le cas de la figure 1. Les couches individuelles des deux multimatériaux 2, 22 qui sont coplanaires, peuvent être constituées du même matériau ou de matériaux différents.

Naturellement l'appareil de mesure suivant l'invention peut être utilisé pour l'étude du comportement de n'importe quel assemblage collé entre un substrat et un multimatériau ou encore entre deux multimatériaux. Ceux-ci peuvent avoir n'importe quelle section transversale et la forme des joints peut être quelconque.

C'est ainsi que notamment l'appareil de mesure selon l'invention peut être utilisé pour réaliser des essais d'arrachement, des essais de pelage, des essais de résistance, en traction de collage et d'ancrage de structure composite tel que notamment sandwich nid d'abeille etc...

## Revendications

1. Procédé de mesure du comportement mécanique fin des liaisons d'interfaces rugueuses liées par adhésifs, engendrant des interphases entre les couches élémentaires différentes d'un multimatériau et un substrat ou un autre multimatériau collés ensemble, caractérisé en ce qu'on interpose, entre les faces du multimatériau (2) et celles de l'autre pièce, substrat (1) ou multimatériau (22), devant être assemblées par collage, des morceaux d'adhésifs bifaces bicollants (8-11 ; 15-17 ; 18, 19 ; 20, 21), on soumet les deux pièces (2 ; 1 ; 22) collées au moyen des morceaux d'adhésifs bifaces à une sollicitation mécanique et on mesure aux moyens de jauges d'extensométrie (j1, j2...jn), reliées à un appareil d'extensométrie (14), les déformations superficielles résultant des contraintes apparaissant dans les différents morceaux d'adhésifs bifaces, sous l'effet de la sollicitation mécanique.

2. Appareil de mesure du comportement mécanique fin des liaisons d'interfaces rugueuses liées par adhésifs, engendrant des interphases entre les couches élémentaires différentes d'un multimatériau et un substrat ou un autre multimatériau collés ensemble, caractérisé en ce qu'il comprend, entre les faces du multimatériau (2) et de l'autre pièce, substrat (1) ou multimatériau (22), devant être collées ensemble, des morceaux d'adhésifs bifaces bicollants (8-11 ; 15-17; 18, 19 ; 20, 21) et un ensemble de jauges d'extensométrie (j1, j2...jn), reliées à un appareil d'extensométrie (14), ces jauges étant disposées à proximité desdites faces pour mesurer les déformations superficielles engendrées par les contraintes produites dans les morceaux d'adhésifs sous l'effet d'une sollicitation mécanique.

3. Appareil suivant la revendication 2 caractérisé en ce que les morceaux d'adhésifs (8-11 ; 15-17 ; 18, 19 ; 20, 21) sont repliés de manière à prendre la forme des intervalles délimités entre les faces parallèles à coller.

4. Appareil suivant la revendication 2 caractérisé en ce que l'assemblage entre les deux pièces (2 ; 1, 22) est réalisé par un joint en escalier et l'assemblage des deux pièces est réalisé au moyen de morceaux d'adhésifs bifaces (8-11, 20, 21) repliés en forme de dièdres.

5. Appareil suivant la revendication 2 caractérisé en ce que l'une des deux pièces assemblées (1, 2) présente une extrémité en forme de pointe, l'autre pièce présente une face en regard creusée en forme de V, de même inclinaison, l'un des morceaux d'adhésifs (16), replié en forme de V, coiffe la pointe de la pièce (1, 2) qui en est pourvue et les jauges (j1...jn) sont placées à proximité immédiate de la pointe ou du creux en forme de V.

6. Appareil suivant la revendication 2 caractérisé en ce que les deux pièces (1, 2) sont collées l'une à l'autre par un assemblage du type tenon et mortaise, avec interposition, entre les faces en regard des deux pièces, de morceaux d'adhésifs (18, 19) pliés en forme de Z.

## Patentansprüche

1. Verfahren zum Messen des mechanischen Gesamtverhaltens der Verbindungen von rauhen Grenzflächen, die durch Kleber verbunden sind, welche Zwischenphasen zwischen den verschiedenen Einzelschichten eines Verbundmaterials und einem Substrat oder einem anderen Verbundmaterial, die miteinander verklebt sind, bilden, **dadurch gekennzeichnet**, daß man zwischen die Flächen des Verbundmaterials (2) und die des anderen Teiles, des Substrats (1) oder Verbundmaterials (22), die durch Klebung zu verbinden sind, beidseitig klebende Klebstreifenstücke (8-11 ; 15-17 ; 18, 19 ; 20, 21) einfügt, daß man die beiden Teile (2 ; 1 ; 22), die mit den zweiseitigen Klebstreifenstücken verklebt sind, einer mechanischen Belastung aussetzt und daß man mit Dehnungsfühlern (j1, j2...jn) die mit einem Zugprüfgerät (14) verbunden sind, die Oberflächenverformungen mißt, die aus den Beanspruchungen resultieren, die in den verschiedenen zweiseitigen Klebstreifenstücken unter der Wirkung der mechanischen Beanspruchung auftreten.

2. Vorrichtung zum Messen des mechanischen Gesamtverhaltens von Verbindungen von rauhen Grenzflächen, die durch Kleber verbunden sind, welche Zwischenphasen zwischen den verschiedenen Einzelschichten eines Verbundmaterials und eines Substrats oder eines anderen Verbundmaterials, die miteinander verklebt sind, bilden, **dadurch gekennzeichnet**, daß sie zwischen den Flächen des Verbundmaterials (2) und des anderen Stückes, des Substrats (1) oder Verbundmaterials (22), die miteinander zu verkleben sind, beidseitig klebende Klebstreifenstücke (8-11 ; 15-17 ; 18, 19 ; 20, 21) und eine Anordnung von Dehnungsmeßfühlern (j1, j2...jn) enthält, die mit einem Dehnungsmeßgerät (14) verbunden sind und in der Nähe der erwähnten Flächen angeordnet sind, um die Oberflächenverformungen zu messen, welche durch die Beanspruchungen, die in den Klebstreifenstücken unter der Wirkung einer mechanischen Beanspruchung erzeugt werden.

3. Vorrichtung nach Anspruch 2, **dadurch gekennzeichnet**, daß die Klebstreifenstücke (8-11 ; 15-17 ; 18, 19 ; 20, 21) derart geformt sind, daß sie die Form von begrenzten Strecken zwischen den zu verklebenden parallelen Flächen annehmen.

4. Vorrichtung nach Anspruch 2, **dadurch gekennzeichnet**, daß die Verbindung zwischen den zwei Teilen (2 ; 1, 22) durch eine stufenartige Fuge realisiert ist und daß die Verbindung der beiden Teile mit zweiseitigen Klebstreifenstücken (8-11, 20, 21) verwirklicht ist, die in Form von Winkeln geknickt sind.

5. Vorrichtung nach Anspruch 2, **dadurch gekennzeichnet**, daß eines der beiden zusammengefügten Teile ein Ende in Form einer Spitze aufweist, daß das andere Teil eine gegenüberliegende vertiefte Fläche in Form eines V gleicher Neigung aufweist, daß eines der Klebstreifenstücke (16), das in Form eines V gefaltet ist, die Spitze des Stückes (1, 2), die eine solche aufweist, bedeckt und daß die Fühler (j1...jn) in der unmittelbaren Nähe der Spitze oder der V-förmigen Vertiefung angeordnet sind.

6. Vorrichtung nach Anspruch 2, **dadurch gekennzeichnet**, daß die beiden Teile (1, 2) miteinander nach Art einer Nut und Feder verklebt sind, wobei zwischen die einander gegenüberliegenden Flächen der beiden Teile Z-förmig gefaltete Klebstreifenstücke (18, 19) eingefügt sind.

## Claims

1. Process for measuring the fine mechanical behaviour of adhesive joints between rough interfaces, generating interphases between the different elementary layers of a multi-material and a substrate or another multi-material glued together, characterized in that there are interposed between the faces of the multi-material 2 and those of the other part, substrate 1 or multi-material 22, having to be assembled by adhesion, pieces of two-faced adhesives which are adhesive on both sides (8-11 ; 15-17 ; 18, 19, 20, 21), the two parts (2, 1, 22) glued by means of the pieces of two-faced adhesives are subjected to a mechanical stress and the superficial deformations resulting from the stresses appearing in the different pieces of two-faced adhesives, under the effect of the mechanical stress, are measured by means of wire strain gauges (j1, j2...jn) connected to an extensometer apparatus 14.

2. Apparatus for measuring the fine mechanical behaviour of the adhesive joints between rough interfaces, generating interphases between the different elementary layers of a multi-material and a substrate or another multi-material glued together, characterized in that it comprises, between the faces of the multi-material 2 and the other part, substrate 1 or multi-material 22 having to be glued together, pieces of two-faced adhesives which are adhesive on both sides (8-11 ; 15-17 ; 18, 19, 20, 21) and a wire strain gauge assembly (j1, j2...jn) connected to an extensometer apparatus 14, these gauges being disposed in the vicinity of said faces to measure the superficial deformations generated by the stresses produced in the pieces of adhesives under the effect of a mechanical stress.

3. Apparatus according to Claim 2, characterized in that the pieces of adhesives (8-11 ; 15-17 ; 18, 19, 20, 21) are folded so as to take the form of the gaps defined between the parallel faces to be glued.

4. Apparatus according to Claim 2, characterized in that the two parts 2 ; 1, 22 are assembled together by a staircase joint and the two parts are assembled by means of pieces of two-faced adhesives (8-11, 20, 21) folded in dihedral form.

5. Apparatus according to Claim 2, characterized in that one of the two assembled parts 1, 2 presents one end in the form of a point, the other part presents an opposite face hollowed in V-form, with the same inclination, one of the pieces of adhesives 16, folded in V form, covers the point of the part 1, 2 which is provided therewith and the gauges (j1...jn) are placed in the immediate vicinity of the point or V-hollow.

6. Apparatus according to Claim 2, characterized in that the two parts 1, 2 are glued to each other by an assembly of the tenon and mortise type, with the interposition, between the opposite faces of the two parts, of pieces of adhesives (18, 19) folded in Z-form.

*Fig. 1*

*Fig. 2*

*Fig. 3*

*Fig. 4*

*Fig. 6*

*Fig. 5*

*Fig. 5a*